Europäisches Patentamt

(19) European Patent Office

Office européen des brevets

(11) Publication number: **0 234 814**
**B1**

(12) **EUROPEAN PATENT SPECIFICATION**

(45) Date of publication of the patent specification:
18.07.90

(21) Application number: **87301211.6**

(22) Date of filing: **12.02.87**

(51) Int. Cl.⁵: **F16C 1/22**

(54) Adjuster device for a control cable assembly.

(30) Priority: **14.02.86 US 829762**

(43) Date of publication of application:
**02.09.87 Bulletin 87/36**

(45) Publication of the grant of the patent:
**18.07.90 Bulletin 90/29**

(84) Designated Contracting States:
**DE ES FR GB IT**

(56) References cited:
**FR-A- 2 111 125**
**US-A- 3 988 943**

(73) Proprietor: **Acco Babcock Inc., 425 Post Road, Fairfield Connecticut 06430(US)**

(72) Inventor: **Lichtenberg, Norman Bernard, 9345 Newberg Road, Tecumseh Michigan 49286(US)**
Inventor: **Chaczyk, Adam Wladyslaw, 14627 Anne Avenue, Allen Park Road§Michigan 48101(US)**

(74) Representative: **Lewis, David Overington, Babcock International plc 217 Tabard Street, London SE1 4UR(GB)**

## Description

This invention relates to an adjuster device for a control cable assembly such as is utilised in conjunction with controls for automobile automatic transmissions, parking brakes, clutches, cruise control devices and gear shift devices.

In US Patent specification No. 3 710 645 there is disclosed an adjuster device for a control cable assembly having cable and conduit elements including a cylindrical adjuster member movable within a tubular body connected to form a part of one of the elements to effect adjustment of the relative length thereof, the cylindrical adjuster member being formed with a longitudinally extending set of chordal teeth and the tubular body being formed with an axial slot having extending therethrough a pawl formed on a radially inner face thereof with teeth, the pawl being resiliently biassed radially inwardly to urge the teeth on the pawl into engagement with the chordal teeth on the cylindrical adjuster member, the teeth being shaped and arranged to co-act together to permit incremental movement of the adjuster member relative to the cylindrical tubular body in one direction by forcing the pawl radially outwardly against the resilient bias to dis-engage the teeth and to prevent such movement in the opposite direction.

By the present invention there is provided an adjuster device for a control cable assembly in which the cylindrical adjuster member is formed with a further longitudinally extending set of chordal teeth diametrically opposed to the longitudinally extending set of chordal teeth and separated therefrom by opposed, arcuate, smooth surfaces, the tubular body is formed with a further axial slot diametrically opposed to the axial slot, the further axial slot having extending therethrough a further pawl formed on a radially inner face thereof with teeth, biassing means common to the pawl and the further pawl resiliently biassing the pawl and the further pawl respectively radially inwardly to urge the respective teeth into engagement with the associated set of chordal teeth, the axial location of full engagement between the teeth on the pawl and the set of chordal teeth on the cylindrical adjuster being displaced axially by a distance corresponding to half of a pitch of the teeth from the axial location of full engagement between the teeth on the further pawl and the further chordal teeth to permit incremental movement in steps of a half of a pitch of the teeth of the tubular body relative to the cylindrical adjuster member in the one direction with the pawl and further pawl being forced alternately radially outwardly against the common resilient bias to dis-engage the respective teeth, the cylindrical adjuster means being rotatable relative to the tubular body to dis-engage the chordal teeth from the associated teeth on the pawl and further pawl.

The invention will now be described, by way of example, with reference to the accompanying drawings, in which:-

Figure 1 is a partly sectioned longitudinal plan view of a portion of a cable control including an adjuster device;

Figure 2 is a sectioned elevation of the cable control adjuster device on an enlarged scale taken along the line II-II in Figure 1;

Figure 3 is a sectioned elevation taken along the line III-III in Figure 2;

Figure 4 is a sectioned elevation taken along the line IV-IV in Figure 2;

Figure 5 is a sectioned elevation similar to Figure 4 but showing the relative position of parts during resetting;

Figure 6 is a plan view of a pawl; Figure 7 is an elevation of the pawl shown in Figure 6;

Figure 8 is a fragmentary view an enlarged scale of the teeth of the pawl;

Figure 9 is a fragmentary view of one of the members of the device; and

Figure 10 is a partly sectioned view of an alternative arrangement of an adjuster device.

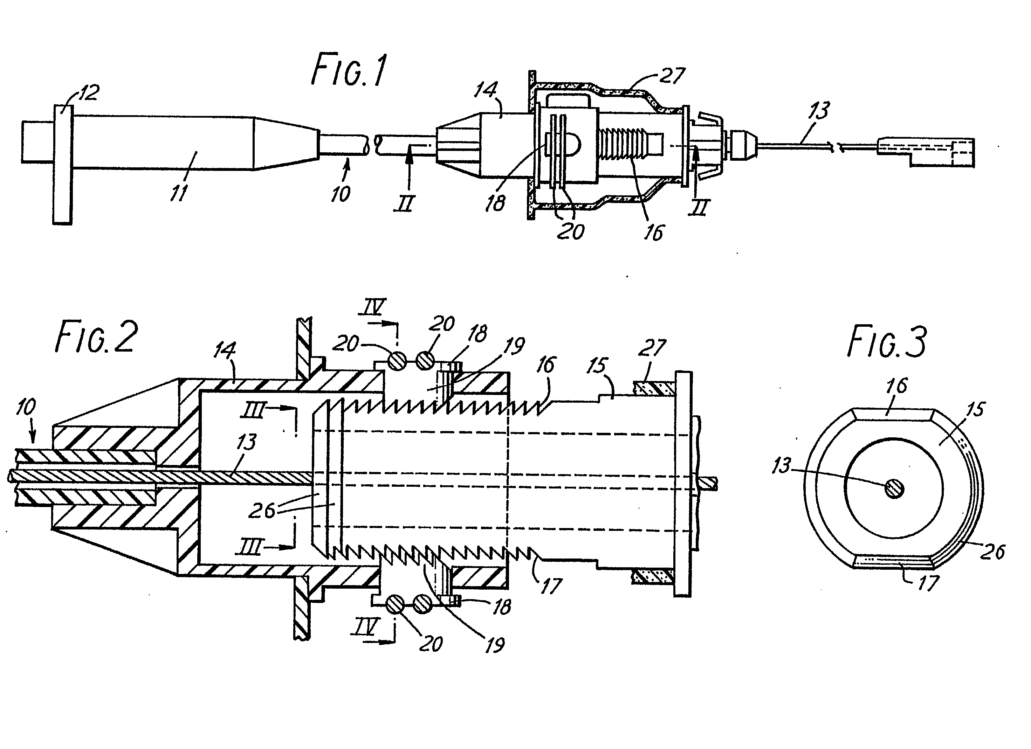

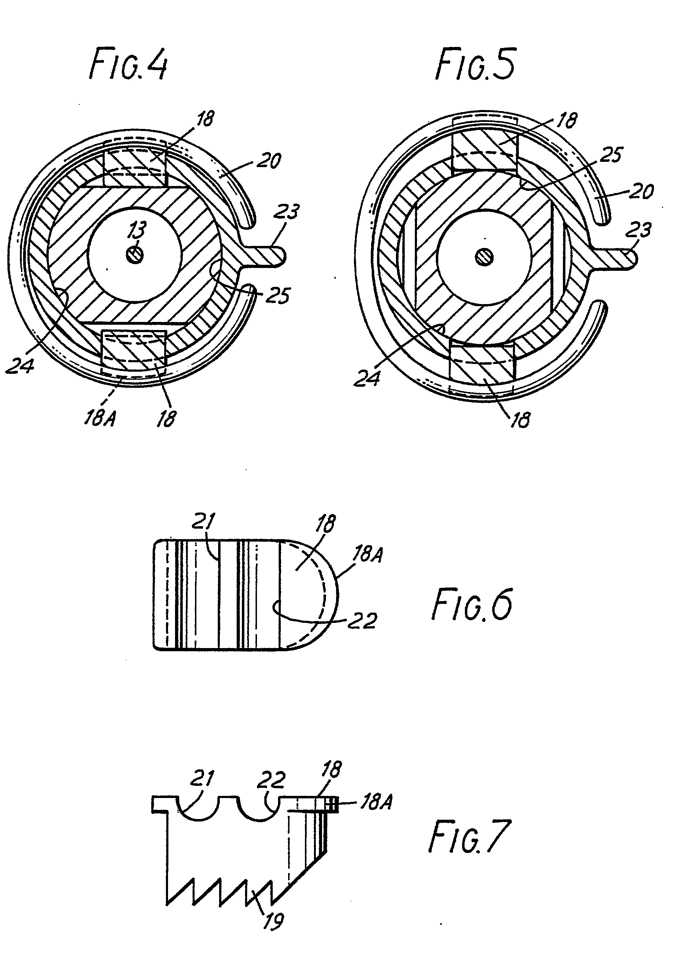

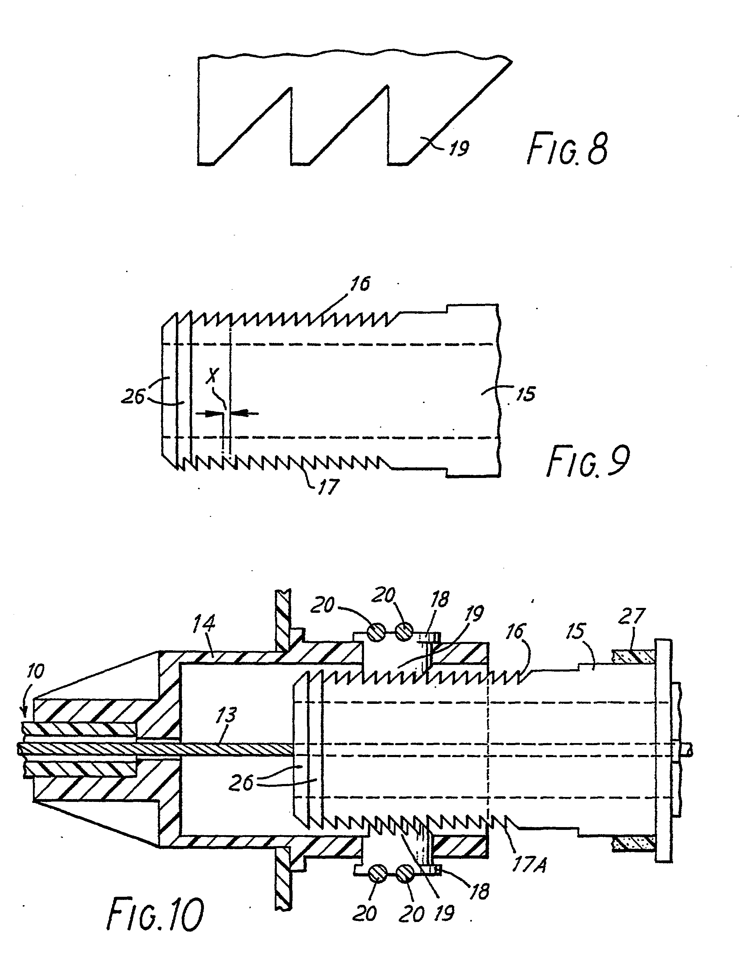

Referring to Figure 1, a cable control system embodying the invention includes a conduit 10 which is attached at one end to a body 11 for attachment as by a tab 12 to a fixed point and a cable 13 extending through the conduit 10. A plastic tubular body 14 is attached to the other end of the conduit 10. A generally cylindrical adjuster member 15 is positioned within the tubular body 14 and is provided with diametrically opposed sets of longitudinally spaced ratcheting teeth 16, 17 which are engaged by aligned teeth 19 formed on pawls 18 located in slots in the tubular body 14, each tooth having a radial plane flank and an inclined plane flank. The pawls 18 are resiliently biassed radially inwardly by generally C shaped springs 20 positioned in grooves 21, 22 in each pawl 18 (Figures 6, 7). The pawls 18 include peripheral tabs 18A for facilitating assembly by restricting radially inward movement of the pawls 18 in the slots. The springs 20 are retained in position circumferntially to maintain the desired spring force by means of a radial projection 23 on the tubular body 14, the projection 23 being positioned circumferentially an equal distance from the pawls 18 such that the C-shaped springs 20 maintain an equal force on th pawls 18. The adjuster member 15 has opposed arcuate smooth surfaces 24, 25 such that when the tubular body 14 is rotated relative to the adjuster member 15 to the position shown in Figure 5 the teeth 16, 17 are disengaged from the pawls 18 permitting longitudinal movement of the tubular body 14 relative to the adjuster member 15 to reset the effective length of the conduit.

Referring to Figure 9, the teeth 16 on the adjuster member 15 are offset longitudinally relative to the teeth 17 by an amount X equal to half of the pitch of the teeth so that, in any ratcheting action, an increment of a half pitch increment adjustment is possible since the sets of teeth 19 on the respective pawls 18 are aligned and only one set of teeth are required to be in full engagement with the teeth 16 or the teeth 17 to transmit the loading in contrast to a full pitch increment as would be the case if teeth 16, 17 were aligned.

Alternatively, as shown in Figure 10, the pawls 18 may be positioned within respective sets of teeth arranged with a longitudinal offset of a half pitch relative to one another and teeth 16, 17A on the adjuster member 15 in longitudinal register.

As shown in Figure 8, the teeth on either the pawls or the adjuster member 15, or both have flattened heads to facilitate initiation of ratcheting at a predetermined loading.

Teeth 26 at the end of the adjuster member 15 within the tubular body 14 extend around the full circumference to act as a stop to prevent inadvertent axial disengagement of the pawls 18 and the adjuster member 15, when the tubular body 14 is rotated relative to the adjuster member 15 to the position shown in Figure 5 in order to adjust the device to a maximum extension by moving the tubular body 14 and the adjuster member 15 apart axially.

A flexible seal or boot 27 is provided over the pawls and the ratcheting teeth as a protective covering.

In operation, the cable control system is installed with the conduit 10 extending, in a curved run, between a pair of brackets fixed in space relative to each other. The cable 13 connects, in spring loaded tension, input and output actuation means such that linear movement at the input means produces axial movement of the cable and a corresponding linear movement at the output actuation means.

As part of the installation process, or, during service in which wear of components has occurred, it is necessary to adjust the effective length of the cable to ensure that a full range of linear movement is attainable at the input and output actuation means. This is achievable manually by adjusting the relative position of the brackets or by altering attachment points on the cable. However, this is not always satisfactory and the arrangement of the present invention provides for automatic adjustment.

As shown, in order to obtain automatic lengthening of the effective length of the cable 13, the system is installed with the adjuster member 15 fully extended from the tubular body 14 with the pawls 18 adjacent the teeth 26 and engaging the teeth 16, 17. Upon first placing a loading on the input actuation means tension is placed on the cable 13 to produce movement at the output actuation means. If such movement is restricted by virtue of the output actuation means engaging a limit stop, continued loading of the input actuation means will produce additional tension in the cable, thereby producing an additional compression loading in the conduit 10. Such compression loading is transmitted through the tubular body 14 and the adjuster member 15 across the inclined flanks of the teeth 16, 17 and 19 as a force having radial and axial components. The radial component is reacted by the springs 20 which deflect outwardly until the pawls are urged outwardly to such an extent that the teeth 16,17 are able to ride, or ratchet, over the adjacent teeth 19. The adjuster member 15 then moves axially inwardly of the tubular body 14 by a distance equivalent to a half of a pitch of the teeth, causing the compression, and thus radial, loading to decrease such that the springs urge the teeth 16, 17 back into engagement with the teeth 19. This movement is repeated until the input actuation means also encounters a limit stop thereby preventing further movement of the input actuation means and hence the production of additional tension within the cable 13. It will be appreciated that movement of the adjuster member 15 axially inwardly of the tubular body 14 is in a series of steps each equal to a half of a pitch of the teeth and that engagement is alternately between the teeth 16 and the teeth 19 and between the teeth 17 and the teeth 19. This arrangement enables the adjustment in the effective length of the cable 13 in relatively small increments such that, in the final position, an adjustment closely approximating to a precise adjustment is achieved. By utilising the arrangement of the teeth 16 being displaced axially by a half pitch from the teeth 17, the teeth are enabled to be dimensioned to have a flank depth and root width giving adequate strength by utilising a coarse pitch whilst retaining the restricted incremental adjustment steps of teeth at a pitch of half that dimension.

Movement of the adjuster member relative to the tubular body in a direction opposed to the direction of adjustment movement when the teeth are engaged is prevented by virtue of the radial flanks on the respective teeth abutting.

The loading at which the teeth ratchet is determined by the resilience of the springs 20 and may be varied by replacing the springs 20 with springs of an appropriately different resilience.

Where it is required to re-set the system following replacement or adjustment of the input or output actuation means, the tubular body 14 and the adjuster member 15 are held manually, twisted through 90°, the one relative to the other, to dis-engage the teeth 16, 17 from the teeth 19, pulled apart axially to the fully extended position with the pawls 18 adjacent the teeth 26 and twisted again through 90° to re-engage the teeth 16, 17 and the teeth 19.

The manner of operating the arrangement shown in Figure 10 is exactly the same as that described above, the only difference being one of construction.

It will be appreciated that other configurations of control cable and loading thereof can be accommodated. Thus the device can be positioned at an intermediate location on the conduit. In a system in which the conduit serves to resist a tension force, the inclined flanks of the teeth may be positioned appropriately to permit the tubular body to move axially toward the adjuster member. Alternatively, where it is desired to adjust the actual length of the cable and thereby adjust the effective length of the conduit, the tubular body and the adjuster member are connected into the cable run with the conduit having an enlarged portion to accommodate the tubular body and adjuster member or the tubular body and adjuster member being positioned at the end of the cable run adjacent and beyond an end of the conduit.

## Claims

1. An adjuster device for a control cable assembly having cable and conduit elements (13, 10) including a cylindrical adjuster member (15) movable within a tubular body (14) connected to form a part of one of the elements to effect adjustment of the relative length thereof, the cylindrical adjuster member (15) being formed with a longitudinally extending set of chordal teeth (16) and the tubular body being formed with an axial slot having extending therethrough a pawl (18) formed on a radially inner face thereof with teeth (19), the pawl being resiliently biassed radially inwardly to urge the teeth (19) on the pawl (18) into engagement with the chordal teeth (16) on the cylindrical adjuster member, the teeth being shaped and arranged to co-act together to permit incremental movement of the adjuster member relative to the cylindrical tubular body in one direction by forcing the pawl radially outwardly against the resilient bias to dis-engage the teeth and to prevent such movement in the opposite direction, characterised in that the cylindrical adjuster member (15) is formed with a further longitudinally extending set of chordal teeth (17) diametrically opposed to the longitudinally extending set of chordal teeth (16) and separated therefrom by opposed, arcuate, smooth surfaces (24, 25), the tubular body is formed with a further axial slot diametrically opposed to the axial slot, the further axial slot having extending therethrough a further pawl (18) formed on a radially inner face thereof with teeth (19), biassing means (20) common to the pawl and the further pawl resiliently biassing the pawl and the further pawl respectively radially inwardly to urge the respective teeth into engagement with the associated set of chordal teeth, the axial location of full engagement between the teeth (19) on the pawl and the set of chordal teeth (16) on the cylindrical adjuster being displaced axially by a distance corresponding to half of a pitch of the teeth from the axial location of full engagement between the teeth (19) on the further pawl and the further chordal teeth (17) to permit incremental movement in steps of a half of a pitch of the teeth of the tubular body relative to the cylindrical adjuster member in the one direction with the pawl and further pawl being forced alternately radially outwardly against the common resilient bias to dis-engage the respective teeth, the cylindrical adjuster means (14) being rotatable relative to the tubular body (15) to dis-engage the chordal teeth (16, 17) from the associated teeth (19) on the pawl and further pawl.

2. An adjuster device for a control cable assembly as claimed in claim 1, characterised in that the biassing means is a circumferential spring means (20) extending substantially around the tubular (14) body and engaging seats (21, 22) in radially outer faces of the pawl and the further pawl with a radially extending projection (23) on the tubular body locating the spring means thereon.

3. An adjuster device for a control cable assembly as claimed in Claim 1 or Claim 2, characterised in that the pawl and further pawl are each formed with a tab (18A) limiting radially inward movement in the associated slot.

4. An adjuster device for a control cable assembly as claimed in any preceding claim, characterised in that an end portion of the cylindrical adjuster member within the tubular body is formed with a circumferential stop (26) adapted to prevent withdrawal of the cylindrical adjuster member past the pawls.

5. An adjuster device for a control cable assembly as claimed in any preceding claim, characterised in that the set of chordal teeth (16) on the cylindrical adjuster member are axially displaced by a distance corresponding to a half of a pitch of the teeth from the further set of chordal teeth (17).

6. An adjuster device for a control cable assembly as claimed in any preceding claim, characterised in that the heads of at least the chordal teeth are flat.

7. An adjuster device for a control cable assembly as claimed in any preceding claim, characterised in that the device is enclosed in a flexible seal or boot (27).

**Revendications**

1. Dispositif d'ajustement pour câble de commande comportant un câble et une conduite (13, 10) comprenant un élément d'ajustement cylindrique (15) mobile à l'intérieur d'un corps tubulaire (14) raccordé pour faire partie d'un des éléments afin d'ajuster leur longueur l'un par rapport à l'autre, l'élément d'ajustement cylindrique (15) étant composé d'un ensemble de dents rectilignes (16) s'étendant longitudinalement et le corps tubulaire étant doté d'une fente axiale avec s'étendant au travers un cliquet (18) doté sur sa face interne radialement de dents (19), le cliquet étant sollicité élastiquement radialement vers l'intérieur pour pousser les dents (19) sur le cliquet (18) en engagement avec les dents rectilignes (16) sur l'élément d'ajustement cylindrique, les dents étant formées et agencées pour co-agir ensemble afin de permettre un déplacement incrémentiel de l'élément d'ajustement relativement au corps tubulaire cylindrique dans un sens en forçant le cliquet radialement vers l'extérieur à l'encontre de la sollicitation élastique afin de dégager les dents et d'empêcher un tel déplacement dans le sens opposé, caractérisé en ce que l'élément d'ajustement cylindrique (15) est doté d'un ensemble supplémentaire de dents rectilignes (17) s'étendant longitudinalement diamètralement opposé à l'ensemble de dents rectilignes (16) s'étendant longitudinalement et séparé de celles-ci par des surfaces lisses, arquées, opposées (24, 25), le corps tubulaire est doté d'une fente axiale supplémentaire diamètralement opposée à la fente axiale, la fente axiale supplémentaire comportant s'étendant au travers un cliquet supplémentaire (18) doté sur sa face interne radialement de dents (19), un moyen de sollicitation (20) commun au cliquet et au cliquet supplémentaire sollicitant de manière élastique le cliquet et le cliquet supplémentaire respectivement radialement vers l'intérieur pour pousser les dents respectives en engagement avec l'ensemble associé de dents rectilignes, l'emplacement axial de plein engagement entre les dents (19) sur le cliquet et l'ensemble de dents rectilignes (16) sur l'élément d'ajustement cylindrique étant déplacé axialement d'une distance correspondant à une moitié de pas de denture à partir de l'emplacement axial de plein engagement entre les dents (19) sur le cliquet supplémentaire et les dents rectilignes supplémentaires (17) afin de permettre un déplacement incrémentiel par étapes d'une moitié de pas des dents du corps tubulaire relativement à l'élément d'ajustement cylindrique dans un sens avec le cliquet et le cliquet supplémentaire étant forcés en alternance radialement vers l'extérieur à l'encontre de la sollicitation élastique commune pour dégager les dents respectives, le moyen d'ajustement cylindrique (14) pouvant tourner relativement au corps tubulaire (15) afin de dégager les dents rectilignes (16, 17) des dents associées (19) sur le cliquet et le cliquet supplémentaire.

2. Dispositif d'ajustement pour câble de commande selon la revendication 1, caractérisé en ce que le moyen de sollicitation élastique est un ressort circonférentiel (20) s'étendant substantiellement autour du corps tubulaire (14) et engageant des sièges (21, 22) dans les faces externes radialement du cliquet et du cliquet supplémentaire avec une projection s'étendant radialement (23) sur le corps tubulaire (14) plaçant le ressort sur celui-ci.

3. Dispositif d'ajustement pour câble de commande selon la revendication 1 ou 2, caractérisé en ce que le cliquet et le cliquet supplémentaire sont dotés chacun d'une patte (18A) limitant le déplacement radialement vers l'intérieur dans la fente associée.

4. Dispositif d'ajustement pour câble de commande selon l'une quelconque des revendications précédentes, caractérisé en ce qu'une portion d'extrémité de l'élément d'ajustement cylindrique à l'intérieur du corps tubulaire est doté d'un arrêt circonférentiel (26) adapté pour empêcher le retrait de l'élément d'ajustement cylindrique au-delà des cliquets.

5. Dispositif d'ajustement pour câble de commande selon l'une quelconque des revendications précédentes, caractérisé en ce que l'ensemble de dents rectilignes (16) sur l'élément d'ajustement cylindrique sont déplacées axialement d'une distance correspondant à une moitié de pas des dents de l'ensemble supplémentaire de dents rectilignes (17).

6. Dispositif d'ajustement pour câble de commande selon l'une quelconque des revendications précédentes, caractérisé en ce que les têtes d'au moins les dents rectilignes sont plates.

7. Dispositif d'ajustement pour câble de commande selon l'une quelconque des revendications précédentes, caractérisé en ce que le dispositif est enfermé dans un joint étanche ou soufflet souple (27).

**Patentansprüche**

1. Justiereinrichtung für eine Antriebsseilanordnung mit den Elementen (13, 10) Seil und Führungshülle einschließlich eines zylindrischen Einstellgliedes (15), welches innerhalb eines rohrförmigen Gehäuses (14) bewegbar ist, die zur Bildung einer der Elemente verbunden sind, um die Einstellung von dessen relativen Länge zu bewirken, mit folgenden Merkmalen:
das zylindrische Einstellglied (15) ist mit einem sich längs erstreckenden Satz von sägezahnartigen Zähnen (16) und das rohrförmige Gehäuse mit einem axialen Schlitz ausgebildet; eine Klinke (18), die an der radial inneren Seite mit Zähne (19) versehen ist, erstreckt sich durch den Schlitz und wird federnd nachgiebig radial nach innen gedrängt, um die Zähne (19) auf der Klinke (18) in Eingriff mit den sägezahnartigen Zähnen (16) auf dem zylindrischen Einstellglied zu bringen; die Zähne sind zur Zusammenarbeit gestaltet und angeordnet, um eine schrittweise Verschiebung des Einstellgliedes relativ zu dem zylindrischen, rohrförmigen Gehäuse in einer Richtung zu ermöglichen, indem die Klinke radial nach außen gegen die Federkraft gepreßt wird, um die Zähne außer Eingriff zu bringen, und solche Bewegung in entgegengesetzter Richtung zu verhindern, gekennzeichnet durch folgende Merkmale:
das zylindrische Einstellglied (15) ist mit einem weiteren, sich längs erstreckenden Satz von sägezahnartigen Zähnen (17) ausgebildet, die zu dem sich längs erstreckenden Satz von sägezahnartigen Zähnen (16) diametral entgegengesetzt angeordnet und von diesen durch sich gegenüberstehende bogenförmige glatte Oberflächen (24, 25) getrennt sind; das rohrförmige Gehäuse ist mit einem weiteren axialen Schlitz ausgebildet, der zu dem axialen Schlitz diametral entgegengesetzt angeordnet ist;
durch den weiteren axialen Schlitz erstreckt sich eine weitere Klinke (18), die an ihrer radialen Innenseite Zähne (19) trägt;
eine Federeinrichtung (20) ist gemeinsam für die Klinke und die weitere Klinke vorgesehen und spannt die Klinke und die weitere Klinke jeweils radial nach innen federnd vor, um die jeweiligen Zähne in Eingriff mit dem zugeordneten Satz der sägezahnartigen Zähne zu drängen;
die axiale Stelle des vollen Eingriffs zwischen den Zähnen (19) an der Klinke und dem Satz von sägenzahnartigen Zähnen (16) an dem zylindrischen Einstellglied sind um eine Strecke entsprechend der halben Zahnteilung von der axialen Stelle des vollen Eingriffs zwischen den Zähnen (19) an der weiteren Klinke und den weiteren sägezahnartigen Zähnen (17) axial gegeneinander versetzt, um eine inkrementale Bewegung in Schritten von einer halben Zahnteilung des rohrförmigen Gehäuses relativ zu dem zylindrischen Einstellglied in die eine Richtung zu ermöglichen, wobei die Klinke und die weitere Klinke abwechselnd radial nach außen gegen die gemeinsame Federspannung gedrängt werden, um die jeweiligen Zähne außer Eingriff zu bringen;
die zylindrische Einstelleinrichtung (14) ist relativ zu dem rohrförmigen Gehäuse (15) drehbar, um die sägezahnartigen Zähne (16, 17) von den zugeordneten Zähnen (19) an der Klinke und der weiteren Klinke außer Eingriff zu bringen.

2. Justiereinrichtung für eine Antriebsseilanordnung nach Anspruch 1, dadurch gekennzeichnet, daß die Vorspanneinrichtung eine Umfangsfedereinrichtung (20) ist, die sich im wesentlichen um das rohrförmige Gehäuse (14) erstreckt und in Sitzflächen (21, 22) in den radial äußeren Oberflächen der Klinke und der weiteren Klinke eingreift, wobei ein radial sich erstreckender Vorsprung (23) auf dem rohrförmigen Geäuse die Federeinrichtung festlegt.

3. Justiereinrichtung für eine Antriebsseilanordnung nach Anspruch 1 oder 2, dadurch gekennzeichnet, daß die Klinke und die weitere Klinke jeweils mit einer Leiste (18A) versehen sind, welche die radiale Einwärtsbewegung in den zugeordneten Schlitz begrenzt.

4. Justiereinrichtung für eine Antriebsseilanordnung nach einem der vorgehenden Ansprüche, dadurch gekennzeichnet, daß ein Endteil des zylindrischen Einstellgliedes innerhalb des rohrförmigen Gehäuses mit einem sich in Umfangsrichtung erstreckenden Anschlag (26) ausgebildet ist, der verhindert, daß das zylindrische Einstellglied bis jenseits der Klinken abgezogen wird.

5. Justiereinrichtung für eine Antriebsseilanordnung nach einem der vorhergehenden Ansprüche, dadurch gekennzeichnet, daß der Satz der sägezahnartigen Zähne (16) auf dem zylindrischen Einstellglied um einen Abstand entsprechend der Hälfte der Zahnteilung von dem weiteren Satz der sägezahnartigen Zähne (17) axial versetzt sind.

6. Justiereinrichtung für eine Antriebsseilanordnung nach einem der vorhergehenden Ansprüche, dadurch gekennzeichnet, daß die Köpfe von mindestens den sägezahnartigen Zähnen eben sind.

7. Justiereinrichtung für eine Antriebsseilanordnung nach einem der vorhergehenden Ansprüche, dadurch gekennzeichnet, daß die Einrichtung in einer flexiblen Dichtung oder in einem Balg (27) eingeschlossen ist.

EP 0 234 814 B1

*Fig.3*

*Fig.1*

*Fig.2*

FIG.4

FIG.5

FIG.6

FIG.7

EP 0 234 814 B1

FIG. 8

FIG. 9

FIG. 10